# EUROPÄISCHE PATENTANMELDUNG

(11) **EP 1 428 787 A1**
(43) Veröffentlichungstag der Anmeldung: **16.06.2004**
(21) Anmeldenummer: 03021215.3
(22) Anmeldetag: 18.09.2003
(51) Int. Cl.: B66C 23/62, B62D 55/065

(54) **Unterwagen eines Krans**

(30) Priorität: 12.12.2002 DE 20219299 U
(71) Anmelder: Liebherr-Werk Ehingen GmbH, 89584 Ehingen/Donau (DE)
(72) Erfinder: Willim, Hans-Dieter, Dipl.-Ing., 89079 Ulm-Unterweiler (DE); Dipl.-Ing Uwer Frommelt, 89584 Ehingen (DE)
(74) Vertreter: Thoma, Michael

(57) **Zusammenfassung**

Die vorliegende Erfindung betrifft einen Unterwagen (1) eines Krans mit einem Raupenfahrwerk (3), das einen Fahrwerksrahmen (4) und vier Einzelraupenwerke (5) aufweist, die an dem Fahrwerksrahmen (4) gelagert sind. Erfindungsgemäß zeichnet sich der Unterwagen (1) dadurch aus, dass der Fahrwerksrahmen (4) aus zwei durchgehenden Querträgern (7), an deren Enden jeweils eines der Einzelraupenwerke (5) befestigt ist, und aus einem Rahmenmittelstück (6), das die beiden Querträger (7) miteinander verbindet, besteht.

## Beschreibung

Die vorliegende Erfindung betrifft einen Unterwagen eines Krans mit einem Raupenfahrwerk, das einen Fahrwerksrahmen und vier Einzelraupenwerke aufweist, die an dem Fahrwerksrahmen gelagert sind.

Großkräne wie z. B. Derrickkräne haben oftmals ein Raupenfahrwerk, um die großen Gewichtskräfte besser zu verteilen und zulässige Flächenpressungen nicht zu überschreiten. Ein Problem ist hierbei jedoch der Transport solcher Kräne. Die Raupenwerke besitzen zum Teil ein solches Gewicht, dass sie nicht in einem Stück verladen und transportiert werden können. Die Raupenwerke werden daher zerlegt, was häufig ein Öffnen der Raupenkette erfordert.

Es wurden bereits Raupenfahrwerke vorgeschlagen, die anstelle der üblichen zwei durchgehenden Raupenketten links und rechts aus vier Einzelraupenwerken bestehen, auf denen der Kran quasi wie ein Auto auf vier Rädern steht. Die Einzelraupenwerke können einzeln demontiert werden. Sie besitzen gegenüber einem durchgehenden Raupenwerk ein wesentlich geringeres Gewicht, so dass sie ohne Zerlegen einzeln verladen und transportiert werden können. Ein Problem besteht bei solchen Raupenfahrwerken mit vier Einzelraupenwerken jedoch darin, dass die Fahrwerksrahmen labil werden und starken Verwindungskräften unterworfen werden.

Der vorliegenden Erfindung liegt daher die Aufgabe zugrunde, einen verbesserten Unterwagen eines Krans der eingangs genannten Art zu schaffen, der Nachteile des Standes der Technik vermeidet und letzteren in vorteilhafter Weise weiterbildet. Vorzugsweise soll ein Unterwagen mit hoher Torsionssteifigkeit geschaffen werden, der zum Zwecke des Transports einfach zu demontieren ist.

Erfindungsgemäß wird diese Aufgabe durch einen Unterwagen gemäß Anspruch 1 gelöst. Bevorzugte Ausgestaltungen der Erfindung sind Gegenstand der Unteransprüche.

Erfindungsgemäß besteht der Fahrwerksrahmen des Unterwagens also aus zwei durchgehenden Querträgern, an deren Enden jeweils eines der vier Einzelraupenwerke befestigt ist, sowie aus einem Rahmenmittelstück, das die beiden Querträger miteinander verbindet. Es ist also keine labile Fahrwerksrahmenkonstruktion mit vielen Einzelträgern vorgesehen. Die beiden durchgehenden Querträger sowie das diese verbindende, dazwischenliegende Rahmenmittelstück bilden eine kompakte und steife Struktur. Insbesondere sind keine vom Rahmenmittelstück oder von den Querträgern weggehende Längsträger vorgesehen, an deren Enden die Einzelraupenwerke oder nochmals Querträger vorgesehen sind, an denen dann die Einzelraupenwerke befestigt sind. Der Fahrwerksrahmen ist einfach aus im wesentlichen drei Teilen aufgebaut. Die Einzelraupenwerke sind unmittelbar an den auskragenden Enden der Querträger befestigt.

Um den Transport unter Beachtung der für den Straßenverkehr zulässigen Ladegewichte zu vereinfachen, sind die Einzelraupen lösbar an den Querträgern befestigt, insbesondere daran angebolzt. Insofern als keine an den Seiten rechts und links durchgehenden Raupenwerke vorgesehen sind, sondern vier Einzelraupenwerke, ist kein Zerlegen der Raupenwerke notwendig, da deren Gesamtgewicht ausreichend niedrig ist, um am Stück transportiert zu werden.

In Weiterbildung der Erfindung sind die Einzelraupenwerke dabei starr an den Querträgern befestigt, d.h. sie sind nicht durch eine Lenkaufhängung oder dergleichen beweglich gelagert. So verlaufen die Kippkanten des Krans nach vorn bzw. hinten jeweils durch die erste bzw. letzte Rolle des Laufwerkes.

Vorzugsweise wirken die Querträger als Torsionsstäbe, so dass eine günstige Flächenpressung auch bei unebenem Boden erreicht werden kann. Wird mit dem Kran über eine Bodenwelle gefahren, können die Einzelraupenwerke sich durch Torsion der Querträger und damit durch eine Schwenkbewegung um die von den Querträgern definierte Querachse anpassen, um die Bodenwelle auszugleichen.

Weiterhin können auch die Querträger abnehmbar an dem Rahmenmittelstück befestigt, insbesondere daran angebolzt sein. Hierdurch vereinfacht sich die Demontage des Unterwagens zum Zwecke des Transports noch weiter.

Um eine stabile Verbindung zwischen den Querträgern und dem Rahmenmittelstück zu erreichen, kann das Rahmenmittelstück sich seitlich erstreckende, vertikale Längsplatten besitzen, die durch Querprofile miteinander verbunden sind und über diese Querprofile in Längsrichtung vorstehen. Die vorstehenden Längsplattenabschnitte können zwischen gabelförmigen, an den Querträgern vorgesehenen Lageraugen sitzen und mit diesen verbolzt sein. Vorzugsweise ist jede der vertikalen Längsplatten am oberen und unteren Rand des Querträgers mit diesem verbolzt.

Die Querträger können einen im wesentlichen geraden Verlauf besitzen und erstrecken sich im rechten Winkel zur Laufrichtung der Raupenwerke. Die Raupenwerke sind vorzugsweise derart an den Querträgern angeordnet, dass die von den Querträgern definierte Querträgerachse etwa mittig zu der von den jeweiligen Raupenketten definierten Umlaufbahn liegt.

Das Rahmenmittelstück, das die beiden Querträger verbindet, trägt in an sich bekannter Weise ein Drehlager, insbesondere einen Drehlagerkranz, an dem der Oberwagen des Krans um eine aufrechte Achse drehbar gelagert ist. Das Rahmenmittelstück sowie die Querträger sind vorzugsweise jeweils als Stahlplatten-Kastenprofil ausgebildet.

Die Einzelraupenwerke sind nach einer bevorzugten Ausführung der Erfindung in zwei Spuren angeordnet, d.h. sie sind jeweils paarweise hintereinander angeordnet. Grundsätzlich könnte jedes Einzelraupenwerk als Doppelraupenkettenwerk ausgebildet sein, d.h. zwei parallel zueinander laufende Raupenketten besitzen. Vorzugsweise jedoch besitzt jedes Einzelraupenwerk nur eine einzige Raupenkette.

Die Erfindung wird nachfolgend anhand eines bevorzugten Ausführungsbeispiels und einer zugehörigen Zeichnung näher erläutert. In der Zeichnung zeigt:

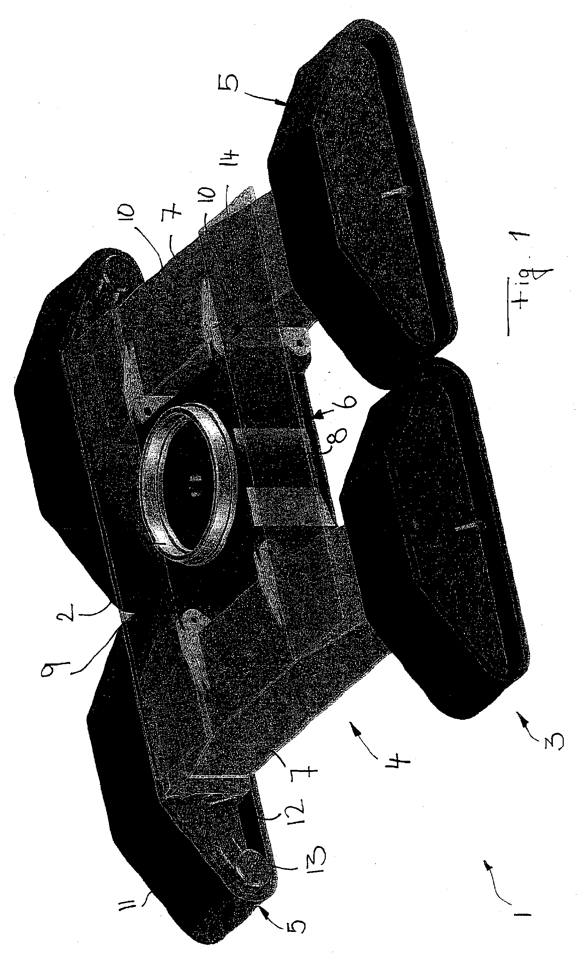

- Fig. 1: eine perspektivische Ansicht eines Unterwagens eines Krans nach einer bevorzugten Ausführung der Erfindung.

Der in der Figur gezeichnete Unterwagen 1 kann einen nicht näher gezeigten Oberwagen eines Derrick-Krans tragen, der um eine aufrechte Achse drehbar von dem Unterwagen 1 getragen wird. An dem Unterwagen 1 ist der Lagerkranz 2 eines entsprechenden Drehlagers gezeigt.

Der Unterwagen 1 umfasst ein Raupenfahrwerk 3, das einen Fahrwerksrahmen 4 aufweist, an dem vier Einzelraupenwerke 5 gelagert sind. Dabei sind rechts und links jeweils zwei Einzelraupenwerke 5 in einer Spur hintereinander angeordnet. Ein an sich übliches durchgehendes Raupenwerk ist also in zwei Einzelraupenwerke 5 aufgeteilt.

Der Fahrwerksrahmen 4 besteht aus einem Rahmenmittelstück 6, an dessen vorderen und hinteren Ende jeweils ein durchgehender Querträger 7 starr befestigt ist. Die beiden Querträger 7 erstrecken sich rechtwinklig zu der Fahrtrichtung des Unterwagens 1 und sind im wesentlichen als gerade Träger ausgebildet. Wie die Figur zeigt, kragen die Querträger 7 rechts und links ein Stück weit über das Rahmenmittelstück 6 hinaus. Die Spannweite der Querträger 7 kann etwa zwei- bis dreimal der Breite des Rahmenmittelstücks 6 entsprechen.

Wie Figur 1 zeigt, umfasst das Rahmenmittelstück 6 an seinen außenliegenden Flanken vertikal ausgerichtete plattenförmige Längsträger 8, die von Querträgern 9 miteinander verbunden sind. Die Längsträger 8 stehen dabei über die Querplatten 9 über. Die überstehenden Trägerabschnitte 9 stecken dabei zwischen gabelförmigen Lagerplatten 10, die jeweils paarweise an den Querträgern 7 vorgesehen sind und an diesen zum Rahmenmittelstück 6 hin vorspringen. Die Lagerplatten 10 bilden dabei gabelförmige Lageraugen 11 aus, die jeweils etwa auf der Ober- und Unterseite der Querträger 7 liegen und mit den vorspringenden Abschnitten der Längsträger 8 des Rahmenmittelstücks 6 verbolzt werden können. Hierdurch kann eine steife und stabile Verbindung der Querträger 7 mit dem Rahmenmittelstück 6 erreicht werden.

An den auskragenden Enden der Querträger 7 sind die Raupenwerke 5 in entsprechender Weise lösbar befestigt, d.h. angebolzt. Die Querträger 7 besitzen stirnseitig vorspringende, voneinander beabstandete Lagerplatten, die in gabelförmigen Lageraugen der Raupenwerke 5 sitzen und damit verbolzt sind (vgl. Figur 1).

Wie Figur 1 zeigt, bestehen die Querträger 7 jeweils aus einem Stahlplatten-Kastenprofil mit geschlossenem Querschnitt, so dass sie ein sehr günstiges Verhältnis von Steifigkeit zu Gewicht besitzen.

Das Rahmenmittelstück 6 kann ebenfalls als Stahlplatten-Kastenprofil ausgebildet sein.

Die Einzelraupenwerke 5 umfassen jeweils eine Raupenkette 11, die auf einer Kettenführung 12 umläuft. Jedes Raupenwerk 5 umfasst einen separaten Antrieb 13.

## Patentansprüche

1. Unterwagen eines Krans mit einem Raupenfahrwerk (3), das einen Fahrwerksrahmen (4) und vier Einzelraupenwerke (5) aufweist, die an dem Fahrwerksrahmen (4) gelagert sind, **dadurch gekennzeichnet, dass** der Fahrwerksrahmen (4) aus zwei durchgehenden Querträgern (7), an deren Enden jeweils eines der Einzelraupenwerke (5) befestigt ist, und aus einem Rahmenmittelstück (6), das die beiden Querträger (7) miteinander verbindet, besteht.

2. Unterwagen nach dem vorhergehenden Anspruch, wobei die Einzelraupenwerke (5) lösbar an den Querträgern (7) befestigt, insbesondere daran angebolzt sind.

3. Unterwagen nach einem der vorhergehenden Ansprüche, wobei die Querträger (7) lösbar an dem Rahmenmittelstück (6) befestigt, insbesondere daran angebolzt sind.

4. Unterwagen nach einem der vorhergehenden Ansprüche, wobei die Einzelraupenwerke (5) starr an den Querträgern (7) befestigt sind und die Querträger (7) vorzugsweise als Torsionsstäbe vorgesehen sind.

5. Unterwagen nach einem der vorhergehenden Ansprüche, wobei das Rahmenmittelstück (6) ein Drehlager (2), insbesondere einen Drehlagerkranz, zur um eine aufrechte Achse drehbaren Lagerung eines Kranoberwagens trägt.

6. Unterwagen nach einem der vorhergehenden Ansprüche, wobei die Querträger (7) einen im wesentlichen geraden Verlauf besitzen und im rechten Winkel zur Laufrichtung der Raupenwerke (5) angeordnet sind.

7. Unterwagen nach einem der vorhergehenden Ansprüche, wobei die Querträger (7) und/oder das Rahmenmittelstück (6) jeweils als Stahlplatten-Kastenprofil ausgebildet sind.

8. Unterwagen nach einem der vorhergehenden Ansprüche, wobei das Rahmenmittelstück (6) seitliche, vertikale, plattenförmige Längsträger (8) besitzt, die durch Querprofile (9) miteinander verbunden sind und über diese in Längsrichtung vorstehen, wobei an den Querträgern (7) jeweils gabelförmige Lageraugen (14) vorgesehen sind, zwischen denen die vorstehenden plattenförmigen Längsträger (8) des Rahmenmittelstücks (6) sitzen und mit denen die genannten Längsträger (8) verbolzt sind.

9. Unterwagen nach einem der vorhergehenden Ansprüche, wobei die Einzelraupenwerke (5) in zwei Spuren angeordnet sind.
